# EUROPEAN PATENT APPLICATION

(11) **EP 4 644 505 A1**
(43) Date of publication of application: **05.11.2025**
(21) Application number: 23912199.9
(22) Date of filing: 26.12.2023
(51) Int. Cl.: C09J 175/08, C09J 4/00, C09J 11/06

(54) **ADHESIVE COMPOSITION, CURED BODY, AND ADHESIVE FOR ELECTRONIC DEVICES**

(30) Priority: 27.12.2022 JP 2022209619
(71) Applicant: Sekisui Chemical Co., Ltd., Osaka-shi, Osaka 530-8565 (JP)
(72) Inventor: TAMAGAWA, Tomokazu, Seoul, 06627 (KR); KIDA, Takumi, Mishima-gun, Osaka 618-0021 (JP); HAGIWARA, Kouhei, Mishima-gun, Osaka 618-0021 (JP); GOTOU, Yuusuke, Mishima-gun, Osaka 618-0021 (JP); YUUKI, Akira, Mishima-gun, Osaka 618-0021 (JP)
(74) Representative: Ter Meer Steinmeister & Partner
(86) International application number: PCT/JP2023/046800
(87) International publication number: WO 2024/143421

(57) **Abstract**

An adhesive composition, comprising a moisture-curable urethane resin (A) that is a reaction product of a polyol (a1) having a polytrimethylene glycol skeleton and a polyfunctional isocyanate (a2).

## Description

### Technical Field

The present invention relates to an adhesive composition for an adhesive for electronic devices.

### Background Art

Conventionally, pressure-sensitive adhesive tape has been used for bonding between members of mobile electronic devices such as smartphones, but moisture-curable resin compositions, which can be automatically produced, have recently been substituted for pressure-sensitive adhesive tape. Known examples of moisture-curable resin compositions that have been used include a moisture-curable urethane resin obtained by reacting a polyol compound, having two or more hydroxyl groups in one molecule, with a polyisocyanate compound, having two or more isocyanate groups in one molecule (for example, see PTL1).

Polyester polyols, polyether polyols, polycarbonate polyols, and others as polyol compounds have been commonly used for moisture-curable urethane resins. As described in PTL1, it has been attempted to blend a radical polymerizable compound in addition to a moisture-curable urethane resin into a curable resin composition to impart photocurability thereto.

### Citation List

### Patent Literature

PTL1: JP 2016-074781 A

### Summary of Invention

### Technical Problem

Impact resistance is required for a cured product of adhesive for electronic devices, for example, mobile electronic devices in order to prevent members from falling off when the devices are dropped. However, conventional moisture-curable polyurethane-based adhesive compositions do not have sufficient impact resistance.

Accordingly, the object of the present invention is to provide a moisture-curable adhesive composition that can fully enhance the impact resistance.

### Solution to Problem

As a result of earnest examination, the present inventors have surprisingly found that the above-mentioned object can be achieved with a moisture-curable urethane resin having polytrimethylene glycol as the main skeleton and completed the following present invention. The present invention provides the following [1] to [16].
[1] An adhesive composition, comprising a moisture-curable urethane resin (A) that is a reaction product of a polyol (a1) having a polytrimethylene glycol skeleton and a polyfunctional isocyanate (a2).
[2] The adhesive composition according to [1], further comprising a radical polymerizable compound and a photopolymerization initiator.
[3] The adhesive composition according to [1] or [2], wherein a content of the moisture-curable urethane resin (A) is 10 parts by mass or more based on 100 parts by mass of the adhesive composition.
[4] The adhesive composition according to [2] or [3], wherein a content of the radical polymerizable compound is 5 parts by mass or more and 80 parts by mass or less based on 100 parts by mass of the adhesive composition.
[5] The adhesive composition according to any of [1] to [4], wherein a weight-average molecular weight of the moisture-curable urethane resin (A) is 2000 or more and 40000 or less.
[6] The adhesive composition according to any of [1] to [5], wherein the content of the moisture-curable urethane resin (A) is 90 parts by mass or less based on 100 parts by mass of the adhesive composition.
[7] The adhesive composition according to any of [1] to [6], further comprising a radical polymerizable compound, wherein the radical polymerizable compound comprises at least one selected from the group consisting of a urethane (meth)acrylate, an alkyl (meth)acrylate, a (meth)acrylate having an alicyclic structure, and a (meth)acrylate having an aromatic ring.
[8] The adhesive composition according to [7], wherein the radical polymerizable compound comprises a urethane (meth)acrylate, and a content of the urethane (meth)acrylate is 1 part by mass or more based on 100 parts by mass of the radical polymerizable compound.
[9] The adhesive composition according to any of [1] to [8], comprising the radical polymerizable compound and the photopolymerization initiator, wherein a content of the polymerization initiator is 0.01 parts by mass or more and 8 parts by mass or less based on 100 parts by mass of the adhesive composition.
[10] The adhesive composition according to any of [1] to [9], wherein a content of the moisture-curable resin comprised in the adhesive composition is 25 parts by mass or more and 90 parts by mass or less based on 100 parts by mass of the adhesive composition.
[11] The adhesive composition according to any of [1] to [10], comprising a moisture-curable resin (B) other than the moisture-curable urethane resin (A) at a mass ratio of the moisture-curable resin (B) to the total of the moisture-curable urethane resin (A) and the moisture-curable resin (B), [B/(A + B)], of 0 or more and 60/100 or less.
[12] The adhesive composition according to any of [1] to [10], wherein the adhesive composition has a viscosity of 50 Pa•s or more and 500 Pa•s or less, the viscosity being measured with a cone-plate viscometer under the conditions of 25°C and 1 rpm.
[13] An adhesive for electronic devices, comprising the adhesive composition according to any of [1] to [12].
[14] A cured product of the adhesive composition according to any of [1] to [12].
[15] A method for disposing the adhesive composition according to any of [1] to [12] between adherends to bond the adherends.
[16] Use of the adhesive composition according to any of [1] to [12] for the bonding between adherends.

### Advantageous Effects of Invention

The present invention can provide a moisture-curable adhesive composition that can fully enhance the impact resistance.

### Brief Description of Drawings

[Fig. 1] Fig. 1 is schematic diagrams showing a method for evaluating PUSH adhesive force. Fig. 1(a) is a plan view. Fig. 1(b) is a side view.
[Fig. 2] Fig. 2 is a schematic side view showing a method for evaluating impact resistance.

### Description of Embodiments

### <Adhesive composition>

The adhesive composition of the present invention contains a moisture-curable urethane resin (A). In the present invention, the moisture-curable urethane resin (A) is incorporated into the adhesive composition to impart moisture curability thereto, and the moisture-curable urethane resin (A) is made to have a specific structure, resulting in improvement in impact resistance. Hereinafter, the moisture-curable urethane resin (A) will be described in detail.

### [Moisture-curable urethane resin (A)]

The moisture-curable urethane resin (A) is a reaction product of a polyol (a1) and a polyfunctional isocyanate (a2). The polyol (a1), having two or more hydroxyl groups in one molecule, can be reacted with the polyfunctional isocyanate (a2), having two or more isocyanate groups in one molecule, to obtain the moisture-curable urethane resin (A).

The moisture-curable urethane resin (A) preferably has isocyanate groups in order to be moisture-curable. The moisture-curable urethane resin (A) preferably has isocyanate groups remaining without being reacted as mentioned above.

The moisture-curable urethane resin (A) only has to have one or more isocyanate groups, and has preferably two or more isocyanate groups, more preferably two to four isocyanate groups, further preferably two isocyanate groups in one molecule. The moisture-curable urethane resin (A) has preferably isocyanate groups at both ends thereof.

### (Polyol (a1))

The polyol (a1) as the raw material of the moisture-curable urethane resin (A) has a polytrimethylene glycol (hereinafter occasionally referred to merely as "PO3G") skeleton. In the present invention, the polyol (a1), having a PO3G skeleton, can be used for the moisture-curable urethane resin (A) to improve the impact resistance of the adhesive composition, easily reduce the viscosity of the adhesive composition, and easily improve the handleability of the adhesive composition.

The PO3G skeleton has at least two continuous structural units each represented by [-CH₂CH₂CH₂-O-], and is specifically represented by the following Formula (1). As long as the PO3G skeleton is represented by Formula (1),the PO3G skeleton may be synthesized by any production method. 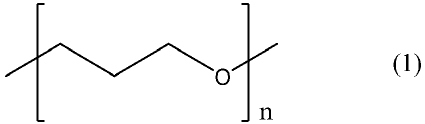 wherein the letter of n is an integer of 2 or more. The letter of n is preferably 3 to 70, more preferably 5 to 60, and further preferably 10 to 55.

From the viewpoints of impact resistance and the like, the polyol (a1), having the PO3G skeleton, is preferably polytrimethylene glycol, represented by the following Formula (1-1): 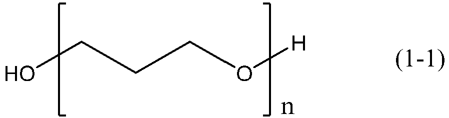 wherein the letter of n is an integer of 2 or more. The letter of n is preferably 3 to 70, more preferably 5 to 60, and further preferably 10 to 55.

The polyol (a1), having the PO3G skeleton, may be a polyol other than the above-mentioned polytrimethylene glycol, and may be a polyol having not only the PO3G skeleton but also an alkylene glycol skeleton other than the PO3G skeleton. For example, the polyol (a1) may be a copolymer of trimethylene glycol and one or more alkylene glycols other than trimethylene glycol. The copolymer is preferably a block copolymer in order to facilitate introducing the above-mentioned PO3G skeleton into the polyol (a1). Examples of the alkylene glycols other than trimethylene glycol include ethylene glycol, propylene glycol, tetramethylene glycol, and isobutylene glycol.

The polyol (a1) may be used alone or in combination of two or more.

The number-average molecular weight of the polyol (a1), having the PO3G skeleton, is preferably 250 or more and 5000 or less, more preferably 500 or more and 4500 or less, and further preferably 750 or more and 4000 or less. When the polyol (a1) has a number-average molecular weight in the above-mentioned range, the weight-average molecular weight or the number-average molecular weight of the moisture-curable urethane resin (A) is easily adjusted to a desired range.

The number-average molecular weight of the polyol (a1) can be calculated from the measured hydroxyl value (mg KOH/g) in the following procedure. Specifically, the hydroxyl value (mg KOH/g) of the polyol is first measured in accordance with JIS K 1557-1. The amount of hydroxyl groups (mmol/g) is then determined from the measured hydroxyl value (mg KOH/g) and the formula weight of KOH. The obtained amount of hydroxyl groups (mmol/g) is subsequently inverted to obtain the reciprocal, which is converted into a numerical value expressed in "g/mol". The numerical value can be multiplied by the number of functional groups (the number of hydroxyl groups) to determine the number-average molecular weight (Mn).

As mentioned above, the polyol (a1) has structure units derived from trimethylene glycol. Trimethylene glycol can be produced from so-called biological raw material, and the polyol (a1) can also be produced from biological raw material. Since the polyol (a1) is produced from biological raw material, the adhesive composition of the present invention can reduce an environmental burden.

Examples of the method for producing trimethylene glycol from biological raw material include the method for producing trimethylene glycol from plant-derived raw material. Examples thereof include a method involving making microorganisms reduce starch or others to produce trimethylene glycol. Trimethylene glycol can be condensation-polymerized by a known method to produce polytrimethylene glycol.

### (Polyfunctional isocyanate (a2))

Either an aromatic polyisocyanate compound or an aliphatic polyisocyanate compound is preferably used as the polyfunctional isocyanate (a2). Examples of the aromatic polyisocyanate compound include diphenylmethane diisocyanate, liquid modified diphenylmethane diisocyanate, polymeric MDI, tolylene diisocyanate, and naphthalene 1,5-diisocyanate.

Examples of the aliphatic polyisocyanate compound include hexamethylene diisocyanate, trimethylhexamethylene diisocyanate, lysine diisocyanate, norbornane diisocyanate, trans-cyclohexane 1,4-diisocyanate, isophorone diisocyanate, hydrogenated xylylene diisocyanate, hydrogenated diphenylmethane diisocyanate, cyclohexane diisocyanate, bis(isocyanatomethyl) cyclohexane, and dicyclohexylmethane diisocyanate.

Among others, aromatic polyisocyanate compounds are preferable as the polyfunctional isocyanate (a2) from the viewpoint of enhancing the moisture-curing rate, the adhesive strength, and the impact resistance. Among aromatic polyisocyanate compounds, diphenylmethane diisocyanate is more preferable.

The polyfunctional isocyanate (a2) may be used alone or in combination of two or more.

The moisture-curable urethane resin (A) only has to be a reaction product of the polyol (a1), having a PO3G skeleton, and the polyfunctional isocyanate (a2). The moisture-curable urethane resin (A) may be obtained by reacting the polyol (a1), having the PO3G skeleton, and the polyfunctional isocyanate (a2) exclusively. Components other than these may also be combined and reacted therewith.

For example, a component other than the polyol (a1), having a PO3G skeleton, may be incorporated into a polyol compound to be reacted with the polyfunctional isocyanate (a2). That is, for example, a polyol compound comprising the polyol (a1), having a PO3G skeleton, and a polyol other than the polyol (a1) may be reacted with the polyfunctional isocyanate (a2) to obtain the moisture-curable urethane resin (A).

Examples of the polyol other than the polyol (a1) include, but not limited to, alkylene glycols other than trimethylene glycol such as ethylene glycol, propylene glycol, tetramethylene glycol, and isobutylene glycol; and polyalkylene glycols such as polyethylene glycol, polypropylene glycol, polytetramethylene glycol (ring-opening polymer of tetrahydrofuran), a ring-opening polymer of 3-methyltetrahydrofuran, and a ring-opening polymer of 2-methyltetrahydrofuran.

As mentioned above, the polyol other than the polyol (a1), having the PO3G skeleton, is used, or a skeleton other than the PO3G skeleton is introduced into the polyol (a1), so that the polyol compound for the raw material of the moisture-curable urethane resin (A) may have a skeleton other than the trimethylene glycol skeleton. Even in such a case, the polyol compound used as the moisture-curable urethane resin (A) preferably contains the trimethylene glycol skeleton mainly. The whole polyol compound contains the trimethylene glycol skeleton preferably at 30% by mass or more, more preferably at 45% by mass or more, and preferably at 60% by mass or more. The trimethylene glycol skeleton as used herein is any of -CH₂CH₂CH₂-O-, -CH₂CH₂CH₂-OH, and -O-CH₂CH₂CH₂-OH. As long as the trimethylene glycol skeleton is any of these skeletons, the trimethylene glycol skeleton may be synthesized by any method.

The polyol compound is usually reacted with the polyfunctional isocyanate to obtain the moisture-curable urethane resin (A) so that the molar ratio of the isocyanate groups (NCO) in the polyfunctional isocyanate to the hydroxyl groups (OH) in the polyol compound, [NCO]/[OH], is within 2.0 to 2.5.

The moisture-curable urethane resin (A) may be used alone or in combination of two or more.

Although the moisture-curable urethane resin (A) may have any weight-average molecular weight, the moisture-curable urethane resin (A) has a weight-average molecular weight of preferably 2000 or more and 40000 or less, more preferably 3000 or more and 30000 or less, further preferably 4000 or more and 25000 or less, and still more preferably 8000 or more and 15000 or less. When the weight-average molecular weight is equal to or greater than the above-mentioned lower limit, the semi-cured adhesive composition that is photocured and not moisture-cured is likely to have at least certain hardness and secure excellent shape-retaining properties. Furthermore, when the weight-average molecular weight is equal to or less than the above-mentioned upper limit, the uncured adhesive composition is likely to have moderate fluidity, for example, even at room temperature (for example, 25°C) to be satisfactory in coatability. When the weight-average molecular weight is in the above-mentioned range, the adhesive force and the impact resistance are likely to be enhanced.

Although the moisture-curable urethane resin (A) may have any number-average molecular weight, the moisture-curable urethane resin (A) has a number-average molecular weight of preferably 2000 or more and 10000 or less, more preferably 2500 or more and 9000 or less, and further preferably 3000 or more and 8000 or less. When the number-average molecular weight is equal to or greater than the above-mentioned lower limit, the semi-cured adhesive composition that is photocured and not moisture-cured is likely to have at least a certain hardness and secure excellent shape-retaining properties. Furthermore, when the number-average molecular weight is equal to or less than the above-mentioned upper limit, the uncured adhesive composition is likely to have moderate fluidity to be sufficient in coatability, for example, even at room temperature (for example, 25°C). When the number-average molecular weight is in the above-mentioned range, the adhesive force and the impact resistance are likely to be enhanced.

The weight-average molecular weight and number-average molecular weight of the moisture-curable resin as mentioned herein are measured by gel permeation chromatography (GPC) and determined in terms of PMMA. Examples of the column for measuring the weight-average molecular weight by GPC in terms of PMMA include ACQUITY APC XT SERIES (available from Nihon Waters K.K.). Examples of the solvent for GPC include DMF.

The content of the moisture-curable urethane resin (A) in the adhesive composition only has to be, for example, 10 parts by mass or more based on 100 parts by mass of the adhesive composition. The content is preferably 20 parts by mass or more, more preferably 25 parts by mass or more, further preferably 30 parts by mass or more, still more preferably 40 parts by mass or more, and still more preferably 50 parts by mass or more from the viewpoint that the moisture-curable urethane resin (A) is incorporated in at least a certain amount to impart moderate moisture-curability and facilitates enhancement in impact resistance and the like.

The content of the moisture-curable urethane resin (A) in the adhesive composition only has to be 100 parts by mass or less based on 100 parts by mass of the adhesive composition. The content is preferably 99 parts by mass or less from the viewpoint of incorporating other components such as the radical polymerizable compound. The content is preferably 90 parts by mass or less, more preferably 80 parts by mass or less, and further preferably 70 parts by mass.

### (Other moisture-curable resin)

The adhesive composition may contain a moisture-curable resin other than the above-mentioned moisture-curable urethane resin (A). The moisture-curable resin other than the moisture-curable urethane resin (A) (hereinafter also referred to as "the other moisture-curable urethane resin (B)") only has to be a moisture-curable resin not having the PO3G skeleton, and is preferably a moisture-curable resin having at least any one of a polyester skeleton, a polyether skeleton, and a polycarbonate skeleton. Such a moisture-curable resin facilitates maintaining the impact resistance and the adhesive strength satisfactorily.

Among the above, a moisture-curable resin having a polyether skeleton is preferable. The moisture-curable resin other than the moisture-curable urethane resin (A) is preferably a moisture-curable urethane resin from the viewpoint of maintaining various performances satisfactorily. Hereinafter, a case where the other moisture-curable resin (B) is a moisture-curable urethane resin will be described in detail.

A polyol compound, having two or more hydroxyl groups in one molecule, can be reacted with a polyfunctional isocyanate, having two or more isocyanate groups in one molecule, to obtain the other moisture-curable resin (B).

Since the description of the polyfunctional isocyanate for the other moisture-curable resin (B) is the same as the description of the above-mentioned polyfunctional isocyanate (a2), the description is omitted. A polyfunctional isocyanate that is the same as or different from the above-mentioned polyfunctional isocyanate (a2) may be used as the polyfunctional isocyanate for the other moisture-curable resin (B).

The polyol compound is usually reacted with the polyfunctional isocyanate to obtain the moisture-curable resin (B) so that the molar ratio of the isocyanate groups (NCO) in the polyfunctional isocyanate to the hydroxyl groups (OH) in the polyol compound, [NCO]/[OH], is within 2.0 to 2.5.

The moisture-curable resin (B) only has to have isocyanate groups. The moisture-curable resin (B) only has to have one or more isocyanate groups in one molecule. The moisture-curable resin (B) has preferably two or more isocyanate groups, more preferably two to four isocyanate groups, and further preferably two isocyanate groups. The moisture-curable resin (B) preferably has isocyanate groups at both ends thereof.

The polyol compound for the other moisture-curable resin (B) preferably has at least any one of a polyester skeleton, a polyether skeleton, and polycarbonate skeleton.

The polyol compound having a polyester skeleton is preferably a polyester polyol. Specific examples include a polyester polyol obtained by the reaction of a polycarboxylic acid and a polyol, and a poly-ε-caprolactone polyol obtained by ring-opening polymerizing ε-caprolactone. The polyester polyol is preferably a polyester diol.

Examples of the above-mentioned polycarboxylic acid as a raw material of the polyester polyol include phthalic acid, terephthalic acid, isophthalic acid, 1,5-naphthalic acid, 2,6-naphthalic acid, succinic acid, glutaric acid, adipic acid, pimelic acid, suberic acid, azelaic acid, sebacic acid, decamethylene dicarboxylic acid, and dodecamethylene dicarboxylic acid. Among these, phthalic acid, terephthalic acid, isophthalic acid, or adipic acid is preferable from the viewpoint of further enhancing the adhesive force at high temperature easily. These polycarboxylic acids may be used alone or in combination of two or more.

Examples of the above-mentioned polyol as a raw material of the polyester polyol include ethylene glycol, propylene glycol, 1,3-propanediol, 1,4-butanediol, neopentyl glycol, 1,5-pentanediol, 1,6-hexanediol, diethylene glycol, and cyclohexanediol. Among these, 1,6-hexanediol or 1,4-butanediol is preferable from the viewpoint of further enhancing the adhesive force at high temperature easily. These polyols may be used alone or in combination of two or more.

Examples of the polyol compound having a polyether skeleton include a polyether polyol. The polyether polyol is preferably a polyether diol. Examples of the polyether polyol include polyalkylene glycols such as ring-opening polymers of polyethylene glycol, polypropylene glycol, and tetrahydrofuran and a ring-opening polymer of 3-methyltetrahydrofuran; random copolymers or block copolymers of these or derivatives thereof; and polyoxyalkylene-modified bisphenol polymers.

The polyoxyalkylene-modified bisphenol polymer as used herein is a polyether polyol obtained by a reaction in which molecules of an alkylene oxide (such as ethylene oxide, propylene oxide, butylene oxide, or isobutylene oxide) are added to active hydrogen moieties of a bisphenol molecular skeleton. The polyether polyol may be a random copolymer or a block copolymer. The above-mentioned polyoxyalkylene-modified bisphenol polymer preferably has a bisphenol molecular skeleton in which one or more alkylene oxides are added to both ends thereof.

Examples of the type of the bisphenol include, but not limited to, A, F, and S. Bisphenol A is preferable.

Examples of the polyol compound having a polycarbonate skeleton include polycarbonate polyols. For example, the polycarbonate polyol is a polyol obtained by reacting an aliphatic polyol or an alicyclic polyol with a carbonate derivative such as carbonate esters or phosgene. A polycarbonate diol is preferable as the polycarbonate polyol.

Examples of the above-mentioned aliphatic polyol or alicyclic polyol include an aliphatic polyol or an alicyclic polyol having 2 to 16 carbon atoms, preferably around 4 to 12. Specifically, the aliphatic polyol may be a linear aliphatic polyol such as ethylene glycol, 1,2-propylene glycol, 1,3-propylene glycol, 1,3-butanediol, 1,4-butanediol, 1,5-pentanediol, 1,6-hexanediol, 1,8-octanediol, 1,9-nonanediol, or diethylene glycol; or a branched aliphatic polyol such as neopentyl glycol or 3-methyl-1,5-pentanediol. Examples of the alicyclic polyol include polycyclohexane.

Although the above-mentioned description states the polyol compound having a polyester skeleton, the polyol compound having a polyether skeleton, and the polyol compound having a polycarbonate skeleton, the other moisture-curable resin (B) may have two or more skeletons of a polyester skeleton, a polyether skeleton, and a polycarbonate skeleton.

The other moisture-curable resin (B) may be used alone or in combination of two or more.

The other moisture-curable resin (B) is preferably contained in at least a certain amount based on the total amount of the moisture-curable resins (namely the total amount of the moisture-curable urethane resin (A) and the other moisture-curable resin (B)) contained in the adhesive composition from the viewpoint that the adhesive composition is likely to exhibit the effect of the present invention. Specifically, for the content of the other moisture-curable resin (B), the mass ratio of the other moisture-curable resin (B) to all of the moisture-curable urethane resin (A) and the other moisture-curable resin (B), [B/(A + B)], is preferably 60/100 or less, more preferably 50/100 or less, and further preferably 45/100 or less.

The moisture-curable resin may not contain the other moisture-curable resin (B). Accordingly, the mass ratio [B/(A + B)] only has to be 0 or more. The ratio is preferably at least a certain ratio from the viewpoint of the effect exhibited by incorporating the other moisture-curable resin (B). The ratio is preferably 5/100 or more, more preferably 10/100 or more, and further preferably 20/100 or more.

The total content of the moisture-curable resins contained in the adhesive composition is preferably 25 parts by mass or more, more preferably 30 parts by mass or more, and further preferably 35 parts by mass or more based on 100 parts by mass of the adhesive composition from the viewpoint of imparting moderate moisture curability. The total content of the moisture-curable resins in the adhesive composition only has to be 100 parts by mass or less based on 100 parts by mass of the adhesive composition. The total content is preferably 99 parts by mass or less from the viewpoint of incorporating the other component such as a radical polymerizable compound. The total content is preferably 90 parts by mass or less, more preferably 80 parts by mass or less, and further preferably 70 parts by mass.

### [Radical polymerizable compound]

It is preferable that the adhesive composition of the present invention further contain a radical polymerizable compound. The radical polymerizable compound can be incorporated into the adhesive composition to easily impart photocurability to the adhesive composition, so that the adhesive composition can be prepared into a photo- and moisture-curable adhesive composition having satisfactory photocurability. Accordingly, only the irradiation of the adhesive composition with light can impart certain adhesive force, so that even the semi-cured adhesive composition that is photocured and not moisture-cured can secure certain adhesive force. The semi-cured adhesive composition that is photocured and not moisture-cured is likely to have at least certain hardness and secure excellent shape-retaining properties. When the adhesive composition has excellent shape-retaining properties, the adhesive composition applied, for example, with a dispenser or the like can be photocured to secure a certain height. A cured product formed from the adhesive composition therefore can secure a certain space between adherends.

When the adhesive composition contains the radical polymerizable compound, the adhesive composition is likely to decrease in viscosity. The uncured adhesive composition is therefore likely to secure moderate fluidity, for example, at room temperature (for example, 25°C) to enable the workability such as the coatability to be satisfactory.

The radical polymerizable compound has a radical polymerizable functional group in each molecule thereof. The radical polymerizable functional group is preferably a compound having an unsaturated double bond. Examples include a (meth)acryloyl group, a vinyl group, a styryl group, and an allyl group.

Among the above-mentioned groups, a (meth)acryloyl group is preferable from the viewpoint of adhesiveness. That is, the radical polymerizable compound preferably contains a compound having a (meth)acryloyl group. The compound having a (meth)acryloyl group is also referred to as a "(meth)acrylic compound" hereinafter. As used herein, the term "(meth)acryloyl group" means either an acryloyl group or a methacryloyl group, the term "(meth)acrylic" means either acrylic or methacrylic, and the same holds true for other similar terms.

Examples of (meth)acrylic compounds include (meth)acrylic ester compounds, epoxy (meth)acrylate, urethane (meth)acrylate, and polyester (meth)acrylate. The above-mentioned (meth)acrylic compounds may be monofunctional or polyfunctional. The urethane (meth)acrylate has no residual isocyanate group.

Examples of monofunctional (meth)acrylic ester compounds among the (meth)acrylic ester compounds include alkyl (meth)acrylates, (meth)acrylates having an alicyclic structure, and (meth)acrylates having an aromatic ring.

Examples of the alkyl (meth)acrylates include alkyl (meth)acrylates having an alkyl group with around 1 to 18 carbon atoms such as methyl (meth)acrylate, ethyl (meth)acrylate, propyl (meth)acrylate, n-butyl (meth)acrylate, isobutyl (meth)acrylate, t-butyl (meth)acrylate, n-octyl (meth)acrylate, isooctyl (meth)acrylate, 2-ethylhexyl (meth)acrylate, isononyl (meth)acrylate, isodecyl (meth)acrylate, lauryl (meth)acrylate, isomyristyl (meth)acrylate, and stearyl (meth)acrylate.

Examples of the (meth)acrylate having an alicyclic structure include cyclohexyl (meth)acrylate, 4-tert-butylcyclohexyl (meth)acrylate, 3,3,5-trimethylcyclohexyl (meth)acrylate, isobornyl (meth)acrylate, and dicyclopentenyl (meth)acrylate.

Examples of the (meth)acrylate having an aromatic ring include phenylalkyl (meth)acrylates such as benzyl (meth)acrylate and 2-phenylethyl (meth)acrylate; and phenoxyalkyl (meth)acrylates such as phenoxyethyl (meth)acrylate. Moreover, the (meth)acrylate having an aromatic ring may be (meth)acrylates having a structure with multiple benzene rings such as a fluorene skeleton or a biphenyl skeleton. Specific examples include fluorene (meth)acrylate and ethoxylated o-phenylphenol acrylate. Moreover, examples also include phenoxypolyoxyethylene (meth)acrylates such as phenoxydiethylene glycol (meth)acrylate, phenoxypolyethylene glycol (meth)acrylate, nonylphenoxydiethylene glycol (meth)acrylate, and nonylphenoxypolyethylene glycol (meth)acrylate.

(Meth)acrylic ester compounds other than alkyl (meth)acrylates, (meth)acrylates having an alicyclic structure, and (meth)acrylates having an aromatic ring are also usable. Examples include hydroxyalkyl (meth)acrylates such as 2-hydroxyethyl (meth)acrylate, 2-hydroxypropyl (meth)acrylate, 2-hydroxybutyl (meth)acrylate, and 4-hydroxybutyl (meth)acrylate; alkoxyalkyl (meth)acrylates such as 2-methoxyethyl (meth)acrylate, 2-ethoxyethyl (meth)acrylate, and 2-butoxyethyl (meth)acrylate; alkoxyethylene glycol (meth)acrylates such as methoxyethylene glycol (meth)acrylate, ethoxyethylene glycol (meth)acrylate; and polyoxyethylene (meth)acrylates such as methoxydiethylene glycol (meth)acrylate, methoxytriethylene glycol (meth)acrylate, methoxypolyethylene glycol (meth)acrylate, ethylcarbitol (meth)acrylate, ethoxydiethylene glycol (meth)acrylate, ethoxytriethylene glycol (meth)acrylate, and ethoxypolyethylene glycol (meth)acrylate.

Furthermore, examples of the monofunctional (meth)acrylic ester compounds include (meth)acrylates having a heterocyclic structure such as tetrahydrofurfuryl (meth)acrylate, alkoxylated tetrahydrofurfuryl (meth)acrylate, cyclic trimethylolpropane formal (meth)acrylate, and 3-ethyl-3-oxetanylmethyl (meth)acrylate; phthalimide acrylates such as N-acryloyloxyethylhexahydrophthalimide; various imide (meth)acrylates; 2,2,2-trifluoroethyl (meth)acrylate; 2,2,3,3-tetrafluoropropyl (meth)acrylate; 1H,1H,5H-octafluoropentyl (meth)acrylate; dimethylaminoethyl (meth)acrylate, diethylaminoethyl (meth)acrylate, 2-(meth)acryloyloxyethyl succinic acid; 2-(meth)acryloyloxyethylhexahydrophthalic acid; 2-(meth)acryloyloxyethyl-2-hydroxypropyl phthalate; glycidyl (meth)acrylate; and 2-(meth)acryloyloxyethyl phosphate.

Examples of difunctional (meth)acrylic ester compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, dimethyloltricyclodecane di(meth)acrylate, ethylene glycol di(meth)acrylate, neopentyl glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethyloldicyclopentadienyl di(meth)acrylate, ethylene oxide-modified isocyanuric acid di(meth)acrylate, 2-hydroxy-3-(meth)acryloyloxypropyl (meth)acrylate, carbonate diol di(meth)acrylate, polyether diol di(meth)acrylate, polyester diol di(meth)acrylate, polycaprolactonediol di(meth)acrylate, and polybutadiene diol di(meth)acrylate.

Examples of the tri- or more functional (meth)acrylic ester compounds include trimethylolpropane tri(meth)acrylate, pentaerythritol tri(meth)acrylate, glycerin tri(meth)acrylate, pentaerythritol tetra(meth)acrylate, ethylene oxide-added trimethylolpropane tri(meth)acrylate, propylene oxide-added trimethylolpropane tri(meth)acrylate, caprolactone-modified trimethylolpropane tri(meth)acrylate, ethylene oxide-added isocyanuric acid tri(meth)acrylate, propylene oxide-added glycerin tri(meth)acrylate, tris(meth)acryloyloxyethyl phosphate, ditrimethylolpropane tetra(meth)acrylate, dipentaerythritol penta(meth)acrylate, and dipentaerythritol hexa(meth)acrylate.

Examples of the above-mentioned epoxy (meth)acrylates include epoxy compounds reacted with (meth)acrylic acid. An epoxy compound is preferably reacted with (meth)acrylic acid in the presence of a basic catalyst in accordance with an ordinary method. The epoxy (meth)acrylate may be a monofunctional epoxy (meth)acrylate or a polyfunctional epoxy (meth)acrylate such as a difunctional epoxy (meth)acrylate. A polyfunctional epoxy (meth)acrylate is preferable.

Examples of the epoxy compound as the raw material for synthesizing the above-mentioned epoxy (meth)acrylate include bisphenol A epoxy resin, bisphenol F epoxy resin, bisphenol S epoxy resin, 2,2'-diallyl bisphenol A epoxy resin, hydrogenated bisphenol epoxy resin, propylene oxide-added bisphenol A epoxy resin, resorcinol epoxy resin, biphenyl epoxy resin, sulfide epoxy resin, diphenyl ether epoxy resin, dicyclopentadiene epoxy resin, naphthalene epoxy resin, phenol novolak epoxy resin, ortho-cresol novolak epoxy resin, dicyclopentadiene novolak epoxy resin, biphenyl novolak epoxy resin, naphthalene phenol novolak epoxy resin, glycidyl amine epoxy resin, alkyl polyol epoxy resin, rubber-modified epoxy resin, glycidyl ester compounds, and bisphenol A episulfide resin.

Examples of commercially available epoxy (meth)acrylates among the above-mentioned epoxy (meth)acrylates include EBECRYL 860, EBECRYL 3200, EBECRYL 3201, EBECRYL 3412, EBECRYL 3600, EBECRYL 3700, EBECRYL 3701, EBECRYL 3702, EBECRYL 3703, EBECRYL 3800, EBECRYL 6040, and EBECRYL RDX63182 (all of the above are available from :DAICEL-ALLNEX LTD.); EA-1010, EA-1020, EA-5323, EA-5520, EACHD, and EMA-1020 (all of the above are available from SHIN-NAKAMURA CHEMICAL Co., Ltd.); Epoxy Ester M-600A, Epoxy Ester 40EM, Epoxy Ester 70PA, Epoxy Ester 200PA, Epoxy Ester 80MFA, Epoxy Ester 3002M, Epoxy Ester 3002A, Epoxy Ester 1600A, Epoxy Ester 3000M, Epoxy Ester 3000A, Epoxy Ester 200EA, and Epoxy Ester 400EA (all of the above are available from Kyoeisha Chemical Co., Ltd.); and Denacol Acrylate DA-141, Denacol Acrylate DA-314, and Denacol Acrylate DA-911 (all of the above are available from Nagase ChemteX Corporation).

For example, a (meth)acrylic acid derivative having hydroxyl groups reacted with an isocyanate compound is usable as the urethane (meth)acrylate. For example, a catalytic amount of a tin compound is preferably used as a catalyst for the reaction of the isocyanate compound with the (meth)acrylic acid derivative. The urethane (meth)acrylate may be a monofunctional urethane (meth)acrylate or a polyfunctional urethane (meth)acrylate such as a difunctional urethane (meth)acrylate. A difunctional urethane (meth)acrylate is preferable.

Examples of the isocyanate compound for obtaining the urethane (meth)acrylate include polyisocyanate compounds such as isophorone diisocyanate, 2,4-tolylene diisocyanate, 2,6-tolylene diisocyanate, hexamethylene diisocyanate, trimethylhexamethylene diisocyanate, diphenylmethane-4,4'-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, triphenylmethane triisocyanate, tris(isocyanatophenyl) thiophosphate, tetramethylxylylene diisocyanate, and 1,6,11-undecane triisocyanate.

The polyol is reacted with an excess isocyanate compound to obtain a chain-extended polyisocyanate compound, which is also usable as the isocyanate compound. Examples of the polyol include ethylene glycol, propylene glycol, glycerin, sorbitol, trimethylolpropane, carbonate diol, polyether diol, polyester diol, and polycaprolactone diol.

Examples of usable isocyanate compounds also include alkane monoisocyanates (having an alkane with preferably around 3 to 12 carbon atoms) such as butane isocyanate, hexane isocyanate, octane isocyanate, and decane isocyanate; and aliphatic monoisocyanates such as cyclic aliphatic monoisocyanates such as cyclopentane isocyanate, cyclohexane isocyanate, and isophorone monoisocyanate.

Examples of the above-mentioned (meth)acrylic acid derivatives having hydroxyl groups include mono(meth)acrylates of dihydric alcohols such as ethylene glycol, propylene glycol, 1,3-propanediol, 1,3-butanediol, 1,4-butanediol, and polyethylene glycol; mono(meth)acrylates or di(meth)acrylates of trihydric alcohols such as trimethylolethane, trimethylolpropane, and glycerin; and epoxy (meth)acrylates such as bisphenol A epoxy (meth)acrylate.

Examples of commercially available urethane (meth)acrylates among the above-mentioned urethane (meth)acrylates include M-1100, M-1200, M-1210, and M-1600 (all of the above are available from TOAGOSEI CO., LTD.); EBECRYL 230, EBECRYL 270, EBECRYL 8402, EBECRYL 8411, EBECRYL 8412, EBECRYL 8413, EBECRYL 8804, EBECRYL 8803, EBECRYL 8807, EBECRYL 9270, EBECRYL 210, EBECRYL 4827, EBECRYL 6700, EBECRYL 220, and EBECRYL 2220 (all of the above are available from DAICEL-ALLNEX LTD.); ART RESIN UN-9000H, ART RESIN UN-9000A, ART RESIN UN-7100, ART RESIN UN-6306, ART RESIN UN-1255, ART RESIN UN-330, ART RESIN UN-3320HB, ART RESIN UN-1200TPK, and ART RESIN SH-500B (all of the above are available from Negami Chemical Industrial Co., Ltd.); U-2HA, U-2PHA, U-3HA, U-4HA, U-6H, U-6LPA, U-6HA, U-10H, U-15HA, U-122A, U-122P, U-108, U-108A, U-324A, U-340A, U-340P, U-1084A, U-2061BA, UA-340P, UA-4100, UA-4000, UA-4200, UA-4400, UA-5201P, UA-7100, UA-7200, and UA-W2A (all of the above are available from SHIN-NAKAMURA CHEMICAL Co., Ltd.); AI-600, AH-600, AT-600, UA-101I, UA-101T, UA-306H, UA-306I, and UA-306T (all of the above are available from Kyoeisha Chemical Co., Ltd.); and CN-902, CN-973, CN-9021, CN-9782, and CN-9833 (all of the above is available from ARKEMA K.K.).

Example of the above-mentioned polyester (meth)acrylates include polyester polyols reacted with (meth)acrylic acid or derivatives thereof. Examples of commercially available polyester (meth)acrylates among the above-mentioned polyester (meth)acrylates include ARONIX M-6100, M-6200, M-6250, M-6500, M-7100, M-7300K, M-8030, M-8060, M-8100, M-8530, M-8560, and M-9050 (all of the above are available from TOAGOSEI CO., LTD.); and DOUBLEMER 2015, DOUBLEMER 2231-TFDOUBLEMER 2319, DOUBLEMER 257, DOUBLEMER 276, DOUBLEMER 284, DOUBLEMER 2019, DOUBLEMER 2232, DOUBLEMER 236, DOUBLEMER 270, DOUBLEMER 278, DOUBLEMER 285, DOUBLEMER 220, DOUBLEMER 2315-100, DOUBLEMER 245, DOUBLEMER 272, DOUBLEMER 278X25, DOUBLEMER 286, DOUBLEMER 2230-TF, DOUBLEMER 2315HM35, DOUBLEMER 246, DOUBLEMER 275, DOUBLEMER 281, and DOUBLEMER 287 (all of the above are available from DOUBLE BOND CHEMICAL IND. CO., LTD.).

The other radical polymerizable compound than the radical polymerizable compound described above can be also optionally used as the radical polymerizable compound. Examples of the other radical polymerizable compound include (meth)acrylamide compounds such as N,N-dimethyl (meth)acrylamide, N-(meth)acryloylmorpholine, N-hydroxyethyl (meth)acrylamide, N,N-diethyl (meth)acrylamide, N-isopropyl (meth)acrylamide, and N,N-dimethylaminopropyl (meth) acrylamide; and vinyl compounds such as styrene, α-methyl styrene, N-vinyl-2-pyrrolidone, and N-vinyl-ε-caprolactam.

The radical polymerizable compound may be used alone or in combination of two or more.

The radical polymerizable compound preferably contains, among the above, at least any of a urethane (meth)acrylate, an alkyl (meth)acrylate, a (meth)acrylate having an alicyclic structure, and a (meth)acrylate having an aromatic ring.

For example, when the urethane (meth)acrylate is used for the radical polymerizable compound, the adhesive force is easily enhanced. When the radical polymerizable compound contains the urethane (meth)acrylate, the content of the urethane (meth)acrylate is preferably 1 part by mass or more, preferably 2 parts by mass or more, and more preferably 4 parts by mass or more based on 100 parts by mass of the radical polymerizable compound. For example, the content of the urethane (meth)acrylate is, but not limited to, preferably 50 parts by mass or less, more preferably 30 parts by mass or less, and further preferably 20 parts by mass or less based on 100 parts by mass of the radical polymerizable compound.

The urethane (meth)acrylate may be used alone or in combination of two or more.

In the case of use of at least any of the alkyl (meth)acrylate, the (meth)acrylate having an alicyclic structure, and the (meth)acrylate having an aromatic ring, the total content thereof is preferably 50 parts by mass or more, preferably 60 parts by mass or more, and more preferably 70 parts by mass or more based on 100 parts by mass of the radical polymerizable compound. The total content of the alkyl (meth)acrylate, the (meth)acrylate having an alicyclic structure, and the (meth)acrylate having an aromatic ring only has to be 100 parts by mass or less based on 100 parts by mass of the radical polymerizable compound. In order to incorporate other components, the total content is preferably 99 parts by mass or less, more preferably 98 parts by mass or less, and further preferably 96 parts by mass or less.

The alkyl (meth)acrylate, the (meth)acrylate having an alicyclic structure, and the (meth)acrylate having an aromatic ring may be used alone or in combination of two or more. Among these, it is preferable to use at least any one of the alkyl (meth)acrylate and the (meth)acrylate having an aromatic ring. It is also preferable to use the urethane (meth)acrylate in combination with at least any of the alkyl (meth)acrylate, the (meth)acrylate having an alicyclic structure, and the (meth)acrylate having an aromatic ring.

The content of the radical polymerizable compound is preferably 5 parts by mass or more and 80 parts by mass or less based on 100 parts by mass of the adhesive composition. When the content of the radical polymerizable compound is equal to or higher than the above-mentioned lower limit, this facilitates appropriately imparting photocurability to the adhesive composition and also securing the shape-retaining properties of the adhesive composition that is photocured and not moisture-cured, and the like. This also facilitates making the coatability of the adhesive composition satisfactory. Meanwhile, when the content of the radical polymerizable compound is equal to or lower than the above-mentioned upper limit, the amount of the moisture-curable urethane resin (A) can be adjusted to at least a certain amount to impart suitable moisture curability to the adhesive composition. The content of the radical polymerizable compound is more preferably 10 parts by mass or more and 70 parts by mass or less, further preferably 15 parts by mass or more and 60 parts by mass or less, still more preferably 20 parts by mass or more and 50 parts by mass or less, and still more preferably 20 parts by mass or more and 48 parts by mass or less based on 100 parts by mass of the adhesive composition from these viewpoints.

### [Photopolymerization initiator]

When the adhesive composition of the present invention contains the above-mentioned radical polymerizable compound, it is preferable that the adhesive composition further contain a photopolymerization initiator. When the adhesive composition contains the photopolymerization initiator, the photopolymerization initiator can appropriately impart photocurability to the adhesive composition.

Examples of the photopolymerization initiator include benzophenone compounds, acetophenone compounds, acyl phosphine oxide compounds, titanocene compounds, oxime ester compounds, benzoin ether compounds, and thioxanthone.

Examples of commercially available photopolymerization initiators among the above mentioned photopolymerization initiators include IRGACURE 184, IRGACURE 369, IRGACURE 379, IRGACURE 651, IRGACURE 784, IRGACURE 819, IRGACURE 907, IRGACURE 2959, IRGACURE OXE01, and Lucirin TPO (all of the above are available from BASF Japan Ltd.); and benzoin methyl ether, benzoin ethyl ether, and benzoin isopropyl ether (all of the above are available from Tokyo Chemical Industry Co., Ltd.).

The content of the photopolymerization initiator in the adhesive composition is preferably 0.01 parts by mass or more and 8 parts by mass or less, more preferably 0.1 parts by mass or more and 6 parts by mass or less, and further preferably 0.4 parts by mass or more and 4 parts by mass or less based on 100 parts by mass of the adhesive composition. When the content of the photopolymerization initiator is in these ranges, the adhesive composition to be obtained is high in photocurability and storage stability. When the content is in the above-mentioned range, the photopolymerization initiator is appropriately photocured to easily enhance the adhesive force.

### (Coupling agent)

The adhesive composition of the present invention may contain a coupling agent. Incorporating a coupling agent into the adhesive composition facilitates enhancement in adhesive force. Examples of the coupling agent include silane coupling agents, titanate-based coupling agents, and zirconate-based coupling agents.

Among the coupling agents, silane coupling agents are preferable due to a high effect of enhancing the adhesiveness. Among the silane coupling agents, a mercaptan silane coupling agent and an amine silane coupling agent are preferable, and an amine silane coupling agent is more preferable due to a high effect of enhancing the impact resistance.

Examples of the above-mentioned amine silane coupling agent include N-phenyl-3-aminopropyltrimethoxysilane, 3-aminopropyltrimethoxysilane, 3-aminopropyltriethoxysilane, 3-(2-aminoethyl)aminopropyltrimethoxysilane, 3-(2-aminoethyl) aminopropyltriethoxysilane, and 3-(2-aminoethyl) aminopropylmethyldimethoxysilane. Among these, N-phenyl-3-aminopropyltrimethoxysilane is preferable.

Examples of the above-mentioned mercaptan silane coupling agent include 3-mercaptopropyltrimethoxysilane, 3-mercaptopropylmethyldimethoxysilane, 3-mercaptopropyltriethoxysilane, and 3-mercaptopropylmethyldiethoxysilane.

Other silane coupling agents than the mercaptan silane coupling agent and the amine silane coupling agent may be used as the silane coupling agent.

Examples of the other silane coupling agents include 3-glycidoxypropyltrimethoxysilane, 3-glycidoxypropylmethyldimethoxysilane, 3-glycidoxypropyltriethoxysilane, 2-(3,4-epoxycyclohexyl)ethyltrimethoxysilane, 3-glycidoxypropylmethyldiethoxysilane, 3-(meth)acryloyloxypropyltrimethoxysilane, 3-(meth)acryloyloxypropyltriethoxysilane, 3-(meth)acryloyloxypropylmethyldimethoxysilane, 3-(meth)acryloyloxypropylmethyldiethoxysilane, vinyl trimethoxysilane, vinyltriethoxysilane, 3-isocyanatopropyltrimethoxysilane, 3-isocyanatopropylmethyldimethoxysilane, 3-isocyanatopropyltriethoxysilane, 3-isocyanatopropylmethyldiethoxysilane, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, and 1,6-bis(trimethoxysilyl)hexane.

Examples of the above-mentioned titanate coupling agent include titanium diisopropoxy bis(acetylacetonate), titanium tetraacetylacetonate, and titanium diisopropoxy bis(ethylacetoacetate).

Examples of the above-mentioned zirconate coupling agent include zirconium tetra-normal-propoxide and zirconium tetra-normal-butoxide.

The coupling agent may be used alone or in combination of two or more.

The content of the coupling agent is preferably 0.05 parts by mass or more and 6 parts by mass or less, more preferably 0.2 parts by mass or more and 4 parts by mass or less, and further preferably 0.4 parts by mass or more and 3 parts by mass or less based on 100 parts by mass of the adhesive composition. When the content of the coupling agent is in these ranges, the adhesive force is easily enhanced without any influence on various performances of the cured product.

### (Filler)

The adhesive composition of the present invention may contain a filler. When the adhesive composition contains a filler, the adhesive composition of the present invention is likely to have preferable thixotropy, so that this facilitates making the shape-retaining properties satisfactory after the application. A particulate filler is preferably used.

The filler is preferably an inorganic filler. Examples of the filler include silica, talc, titanium oxide, zinc oxide, and calcium carbonate. Among these, silica is preferable because silica makes the adhesive composition highly ultraviolet-transmissive. The filler may be subjected to hydrophobic surface treatment such as silylation treatment, alkylation treatment, and epoxidation treatment.

The filler may be used alone or in combination of two or more.

The content of the filler is preferably 0.5 parts by mass or more and 30 parts by mass or less, more preferably 1 part by mass or more and 25 parts by mass or less, and further preferably 2 parts by mass or more and 20 parts by mass or less based on 100 parts by mass of the adhesive composition.

### (Moisture curing accelerator catalyst)

The adhesive composition of the present invention may contain a moisture curing accelerator catalyst for catalyzing the moisture curing reaction of the moisture-curable resin. The use of the moisture curing accelerator catalyst further makes the moisture curability of the adhesive composition higher, and facilitates enhancing the adhesive force.

Specific examples of the moisture curing accelerator catalyst include amine compounds and metal catalysts. Examples of the amine compounds include compounds having a morpholine skeleton such as di(methylmorpholino)diethyl ether, 4-morpholinopropyl morpholine, and 2,2'-dimorpholinodiethyl ether; dimethylamino group-containing amine compounds having two dimethylamino groups such as bis(2-dimethylaminoethyl) ether and 1,2-bis(dimethylamino)ethane; triethylamine; 1,4-diazabicyclo[2.2.2]octane; and 2,6,7-trimethyl-1,4-diazabicyclo[2.2.2]octane. Examples of the metal catalysts include tin compounds such as di-n-butyl tin dilaurate, di-n-butyl tin diacetate, and tin octylate; zinc compounds such as zinc octylate and zinc naphthenate; and other metal compounds such as zirconium tetraacetylacetonate, copper naphthenate, and cobalt naphthenate.

The adhesive composition of the present invention may contain other additives such as wax particles, ionic liquid, a coloring agent, foamed particles, expanded particles, a reactive diluent, an antioxidant, and a radical scavenger besides the components described above.

The adhesive composition may be diluted with a solvent as needed. When the adhesive composition is diluted with a solvent, the amounts (part by mass or % by mass) in the adhesive composition mean part by mass or % by mass based on solid contents, namely part by mass or % by mass excluding the amount of the solvent.

### (Impact resistance)

A pair of adherends is bonded through the adhesive composition of the present invention, followed by curing the adhesive composition to obtain a measurement sample. In an impact resistance test on the measurement sample, endurance count is preferably 50 times or more, more preferably 100 times or more, further preferably 150 times or more, and still more preferably 200 times or more. As the above-mentioned endurance count increases in the present invention, the impact resistance becomes more satisfactory. Even though the electronic device is dropped during use, components bonded with the adhesive composition can be prevented from falling off upon the dropping.

The impact resistance test is performed in the following procedure: A 200-g stainless steel weight is repeatedly dropped from a height of 200 mm to one adherend with a Dupont drop impact tester until the one adherend is peeled away. The number of drops of the weight is defined as the endurance count. In the impact resistance test, an aluminum plate is used as the one adherend of the pair of adherends, and a polycarbonate plate is used as the other adherend.

The amounts and the types of the components constituting the adhesive composition can be optionally changed to regulate the impact resistance. For example, as mentioned above, the use of a specific moisture-curable urethane resin (A) facilitates enhancing the impact resistance.

### (Viscosity)

The adhesive composition of the present invention has a viscosity of preferably 500 Pa•s or less, and more preferably 250 Pa•s or less, the viscosity being measured with a cone-plate viscometer under the conditions of 25°C and 1 rpm. The reduction of the viscosity at 25°C as mentioned above enhances the coatability to make the workability satisfactory. For example, the above-mentioned viscosity only has to be 50 Pa•s or more from the viewpoint that the adhesive composition is prevented from wetting the adherends and spreading thereon excessively during application.

In the adhesive composition of the present invention, as mentioned above, the incorporation of the specific moisture-curable urethane resin (A) into the moisture-curable resin facilitates the reduction of the viscosity. Furthermore, the incorporation of the radical polymerizable compound into the moisture-curable resin enables further reducing the viscosity. The types and the amounts of the moisture-curable resin and the radical polymerizable compound can also be optionally adjusted to regulate the viscosity. Moreover, when the filler is contained, the viscosity can be optionally regulated depending on the type and the amount of the filler.

### (PUSH adhesive force)

The adhesive composition of the present invention preferably has a PUSH adhesive force of 5 MPa or more. A pair of adherends is bonded through the adhesive composition of the present invention, followed by curing the adhesive composition to obtain a measurement sample. The PUSH adhesive force is adhesive force to be measured while force is applied to the measurement sample vertically to the bonded surfaces. In the measurement of the PUSH adhesive force, an aluminum plate is used as one adherend of the pair of adherends, and a polycarbonate plate is used as the other adherend. When the adhesive composition has at least certain PUSH adhesive force, this can enhance performance as an adhesive, and facilitates making the impact resistance satisfactory. The PUSH adhesive force is more preferably 6 MPa or more. For example, the upper limit of the PUSH adhesive force is, but not particularly limited to, 50 MPa.

The amounts and types of the components constituting the adhesive composition can be optionally changed to regulate the PUSH adhesive force. For example, the use of the specific moisture-curable urethane resin (A) described above facilitates enhancing the PUSH adhesive force. When the radical polymerizable compound is used, the type and the amount of the radical polymerizable compound can be optionally selected to regulate the PUSH adhesive force. The PUSH adhesive force can also be regulated depending on whether additives such as the coupling agent are used, and the types and the amounts thereof.

Examples of a method for producing the adhesive composition of the present invention include a method involving mixing the moisture-curable urethane resin (A); the other moisture-curable resin (B) and the radical polymerizable compound to be blended as needed; and additives such as the photopolymerization initiator, the filler, and the coupling agent to be blended as needed using a mixer. Examples of the mixer include homodispers, homomixers, universal mixers, planetary mixers (planetary centrifugal mixers), kneaders, and three-roll mixers.

### <Method for using adhesive composition>

The adhesive composition of the present invention is preferably cured and used as the cured product. The adhesive composition of the present invention has at least moisture-curability. Accordingly, for example, the adhesive composition or the semi-cured adhesive composition is disposed between two adherends to bond the two adherends with the adhesive composition cured by at least moisture (cured product).

The adhesive composition of the present invention favorably has photocurability, and preferably has the radical polymerizable compound to have satisfactory photocurability. That is, the photo- and moisture-curable adhesive composition is preferably used. Accordingly, it is preferable that the adhesive composition of the present invention be photocured by light irradiation to be, for example, in the B-stage state (semi-cured state), and the photocured adhesive composition be then further moisture-cured to be fully cured for use.

When the adhesive composition is disposed between the adherends to joint the adherends, the adhesive composition is applied to one adherend and then photocured by light irradiation to be, for example, in the B-stage state, and the other adherend is laid on the photocured adhesive composition to temporarily bond the adherends by moderate adhesive force. The moisture-curable resin containing the moisture-curable urethane resin (A) is then moisture-cured to fully cure the adhesive composition that is in the B-stage state, so that the adherends stacked through the adhesive composition are jointed by sufficient adhesive force.

Although the adhesive composition is preferably applied to the adherend, for example, with a dispenser, the means for application thereof may be any means. As long as the radical polymerizable compound is cured by the light, the light radiated upon the photocuring may be any light, but is preferably ultraviolet rays. The adhesive composition only has to be left to stand in the atmosphere for predetermined time for fully curing the adhesive composition by moisture.

The adhesive composition of the present invention is used, for example, as adhesive for electronic components. The adhesive composition of the present invention is preferably used as adhesive for electronic devices, especially mobile electronic devices. Electronic components or electronic devices such as mobile electronic devices for which the adhesive composition of the present invention is used preferably include cured products of the adhesive composition.

The adhesive composition may be used for any adherends. The adherends are preferably parts constituting electronic devices such as mobile electronic devices. The parts are preferably electronic components. The materials of the adherends may be any materials such as metals, glass, and plastics. The adherends may have any shapes. Examples of shapes of the adherends include films, sheets, plates, panels, trays, rods (rod-shaped objects), boxes, and housings.

Examples of the mobile electronic devices include, but not limited to, mobile phones such as smartphones; digital cameras; wearable terminals; mobile game devices; tablet computers; notebook computers; and action cameras. Among these, smartphones and wearable terminals are preferable. Since the adhesive composition of the present invention has satisfactory impact resistance, the adhesive composition is particularly suitable for mobile electronic devices.

Electronic components commonly have boards. Electronic components for which the adhesive composition of the present invention is used include the cured products of the adhesive composition and boards. Various electronic circuits are commonly disposed on boards. Electronic devices such as mobile electronic devices for which the adhesive composition of the present invention is used also include the cured products of the adhesive composition of the present invention and boards in the same way.

For example, the boards of electronic components as the adherends may be jointed through the adhesive composition of the present invention. The boards may be jointed to other members (for example, housings) of electronic devices through the adhesive composition of the present invention.

For example, the adhesive composition of the present invention may be used for jointing a board to another board inside electronic devices to obtain an assembly part. The thus obtained assembly part includes a first board, a second board, and the cured products of the present invention, and at least part of the first board is jointed to at least part of the second board through the cured products.

### Examples

Although the present invention will be described in further detail by Examples, the present invention is not limited in any way by these examples.

In these Examples and Comparative Examples, adhesive compositions were evaluated as follows.

### (Viscosity)

The photo- and moisture-curable resin compositions obtained in Examples and Comparative Examples were measured for viscosity at 25°C and a number of revolutions of 1 rpm with a cone-plate viscometer (available from Toki Sangyo Co., Ltd., "VISCOMETER TV-22"). The viscosities were evaluated by the following evaluation criteria.
A: The viscosity is 250 Pa•s or less.
B: The viscosity is more than 250 Pa•s and 500 Pa•s or less.
C: The viscosity is more than 500 Pa•s.

### (PUSH adhesive force)

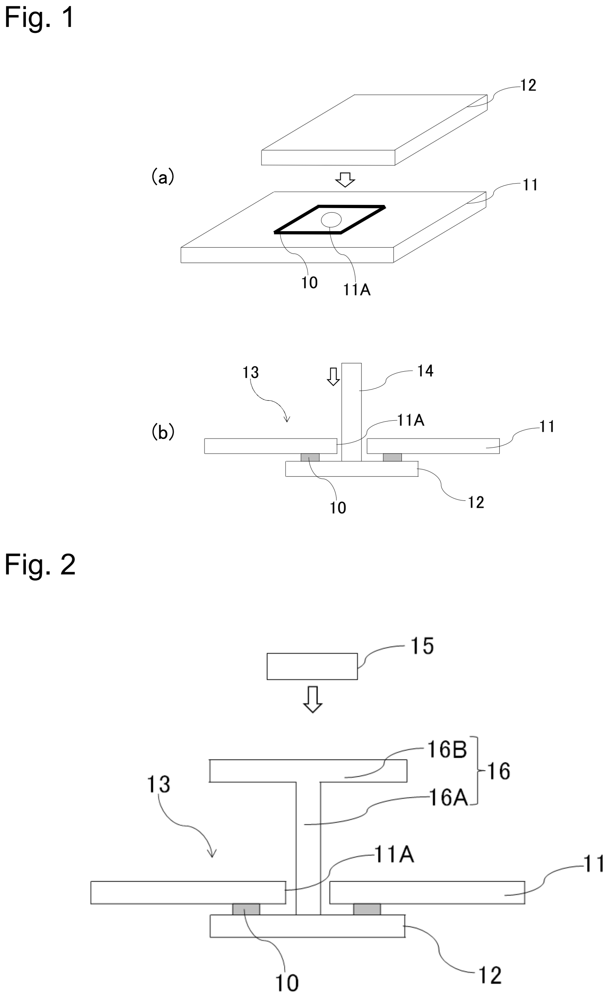

As shown in Fig. 1(a), a first board 11 having a size of 90 mm × 50 mm and 5 mm in thickness and having a hole 11A with a diameter of 12 mm at the center and a second board 12 having a size of 50 mm × 50 mm and 5 mm in thickness were provided. The first board 11 was an aluminum (AL) plate, and the second board 12 was a polycarbonate (PC) plate.

An adhesive composition 10 was applied with a dispenser in the shape of a quadrilateral frame having a size of 20 mm × 20 mm and formed by four sides each having a width of 1 mm ± 0.2 mm and a height of 0.25 mm ± 0.05 mm so that the frame surrounds the hole 11A of the first board 11. The adhesive composition 10 was irradiated with 1000 mJ/cm² of ultraviolet rays at 1000 mW/cm² using a UV-LED (wavelength: 365 nm) within 1 minute after the application, so that the adhesive composition 10 was photocured. The second board 12 was then laid on the first board 11 through gap material (not shown) having a height of 0.2 mm and the adhesive composition 10 so that the center of the first board 11 was aligned with the center of the second board 12. A 2-kg weight was left to stand on the second board 12 for 10 seconds to pressure-bond the first board 11 to the second board 12 through the adhesive composition 10. The 2-kg weight was then removed, and the pressure-bonded boards were left alone at 25°C and 50% RH for 24 hours to moisture-cure the adhesive composition 10 for obtaining a measurement sample 13. The gap material was removed from the measurement sample 13 after the moisture-curing.

The obtained measurement sample 13 was disposed with the first board 11 up and the second board 12 down. A rod-shaped member 14 having a circular section with a diameter of 10 mm was inserted into the hole 11A with the first board 11 supported by a stainless steel jig. As shown in Fig. 1(b), the second board 12 was pushed perpendicularly downward with the rod-shaped member 14 at a speed of 10 mm/minute. Stress upon peeling of the second board 12 from the first board 11 was measured and defined as the adhesive force (PUSH adhesive force). The adhesive force was evaluated by the following evaluating criteria.
A: The adhesive force is 6 MPa or more.
B: The adhesive force is 5 MPa or more and less than 6 MPa.
C: The adhesive force is less than 5 MPa.

### (Impact resistance)

As shown in Fig. 2, a measurement sample 13 was provided in the same procedure as mentioned above. The first board 11 was supported using a stainless steel jig with the first board 11 up and the second board 12 down.

Provided was a jig 16 (material: stainless steel) having a flat plate portion 16B (20 mm × 20 mm, 5 mm in thickness) and a rod-shaped portion 16A (diameter: 10 mm, columnar) connected to the center of the flat plate portion 16B. As shown in Fig. 2, the rod-shaped portion 16A of the jig 16 was inserted into the hole 11A of the first board 11 and stood at the center of the second board 12.

In the arrangement, a 200-g stainless steel weight 15 is repeatedly dropped from a position 200 mm higher than the flat plate portion 16B perpendicularly downward to the center of the flat plate portion 16B with a Dupont drop impact tester. The second board 12 was peeled away by the impact of the weight 15. The number of drops of the weight until the peeling was evaluated as the endurance count.
A: The endurance count is 150 times or more.
B: The endurance count is 50 times or more and less than 150 times.
C: The endurance count is less than 50 times.

Moisture-curable resins used in Examples and Comparative Examples had been prepared in accordance with the following Synthesis Examples.

### <<Urethane resin (A1)>>

### [Synthesis Examples 1]

A separable flask with a capacity of 500 mL was charged with 100 parts by mass of polytrimethylene glycol (compound represented by Formula (1-1), number-average molecular weight = 2000) as the polyol (a1) and 0.01 parts by mass of dibutyltin dilaurate. The mixture in the flask was stirred and mixed under vacuum (20 mm Hg or less) at 100°C for 30 minutes. The pressure was then returned to normal pressure. The flask was charged with 26.5 parts by mass of diphenylmethane diisocyanate (available from Tosoh Corporation, Millionate MT) as the polyfunctional isocyanate (a2). The mixture was stirred at 80°C for 3 hours for reaction to obtain a PO3G skeleton-containing urethane resin (A1) containing a polytrimethylene glycol skeleton with isocyanate groups at both ends thereof. The obtained urethane resin (A1) had a weight-average molecular weight (Mw) of 11000 and a number-average molecular weight (Mn) of 5000.

### <<Urethane resin (A2)>>

### [Synthesis Example 2]

A separable flask with a capacity of 500 mL was charged with 100 parts by mass of polytrimethylene glycol (compound represented by Formula (1-1), number-average molecular weight = 2700) as the polyol (a1) and 0.01 parts by mass of dibutyltin dilaurate. The mixture in the flask was stirred and mixed under vacuum (20 mm Hg or less) at 100°C for 30 minutes. The pressure was then returned to normal pressure. The flask was charged with 20 parts by mass of diphenylmethane diisocyanate (available from Tosoh Corporation, Millionate MT) as the polyfunctional isocyanate (a2). The mixture was stirred at 80°C for 3 hours for reaction to obtain a PO3G skeleton-containing urethane resin (A2) containing a polytrimethylene glycol skeleton with isocyanate groups at both ends thereof. The obtained urethane resin (A2) had a weight-average molecular weight (Mw) of 13000 and a number-average molecular weight (Mn) of 7000.

### <<Urethane resin (B1)>>

### [Synthesis Example 3]

A separable flask with a capacity of 500 mL was charged with 100 parts by mass of polytetramethylene ether glycol (available from Mitsubishi Chemical Corporation, trade name: "PTMG-2000") as a polyol compound and 0.01 parts by mass of dibutyltin dilaurate. The mixture in the flask was stirred and mixed under vacuum (20 mm Hg or less) at 100°C for 30 minutes. The pressure was then returned to normal pressure. The flask was charged with 26.5 parts by mass of diphenylmethane diisocyanate (available from Tosoh Corporation, Millionate MT) as a polyfunctional isocyanate. The mixture was stirred at 80°C for 3 hours for reaction to obtain a polytetramethylene ether glycol (PTMG) skeleton-containing urethane resin (B1) containing a PTMG skeleton with isocyanate groups at both ends thereof. The obtained urethane resin (B1) had a weight-average molecular weight (Mw) of 12000 and a number-average molecular weight (Mn) of 6300.

### <<Urethane resin (B2)>>

### [Synthesis Example 4]

A separable flask with a capacity of 500 mL was charged with 100 parts by mass of polypropylene glycol (available from AGC Inc., trade name: "EXCENOL 2020") as a polyol compound and 0.01 parts by mass of dibutyltin dilaurate. The mixture in the flask was stirred and mixed under vacuum (20 mm Hg or less) at 100°C for 30 minutes. The pressure was then returned to normal pressure. The flask was charged with 28 parts by mass of diphenylmethane diisocyanate (available from Tosoh Corporation, Millionate MT) as a polyfunctional isocyanate. The mixture was stirred at 80°C for 3 hours for reaction to obtain a polypropylene glycol (PPG) skeleton-containing urethane resin (B2) containing a PPG skeleton with isocyanate groups at both ends thereof. The obtained urethane resin (B2) had a weight-average molecular weight (Mw) of 11000 and a number-average molecular weight (Mn) of 7000.

### <<Urethane resin (B3)>>

### [Synthesis Example 5]

A separable flask with a capacity of 500 mL was charged with 100 parts by mass of a polycarbonate diol (available from Kuraray Co., Ltd., trade name: "Kuraray Polyol C-1090") as a polyol compound and 0.01 parts by mass of dibutyltin dilaurate. The mixture in the flask was stirred and mixed under vacuum (20 mm Hg or less) at 100°C for 30 minutes. The pressure was then returned to normal pressure. The flask was charged with 52 parts by mass of diphenylmethane diisocyanate (available from Tosoh Corporation, Millionate MT) as a polyfunctional isocyanate. The mixture was stirred at 80°C for 3 hours for reaction to obtain a polycarbonate (PC) skeleton-containing urethane resin (B3) having a PC skeleton with isocyanate groups at both ends thereof. The obtained urethane resin (B3) had a weight-average molecular weight (Mw) of 6000 and a number-average molecular weight (Mn) of 4000.

Other components than the moisture-curable urethane resins used in Examples and Comparative Examples were as follows.

### (Radical polymerizable compounds)

Urethane acrylate: difunctional, available from Negami Chemical Industrial Co., Ltd., trade name: "ART RESIN UN-6306"
Lauryl acrylate: available from Kyoeisha Chemical Co., Ltd., trade name: "Light Acrylate L-A", monofunctional
Phenoxyethyl acrylate: available from Kyoeisha Chemical Co., Ltd., trade name: "Light Acrylate PO-A", monofunctional
Silane coupling agent: available from Shin-Etsu Chemical Co., Ltd., trade name: "KBM-573", "N-phenyl-3-aminopropylmethoxysilane"
Filler: Trimethylsilylated silica, available from NIPPON AEROSIL CO., LTD., trade name: "R812", primary particle size: 7 nm
Photopolymerization initiator: available from BASF SE, trade name: "IRGACURE 369"
Other additives: Radical scavenger, antioxidant, and moisture curing catalyst

### [Examples 1 to 9 and Comparative Examples 1 to 3]

Materials were added at blending ratios described in Table 1, and the mixtures were stirred with a planetary mixer (available from THINKY CORPORATION, "Awatorirentaro") at 50°C. The mixtures were then uniformly mixed with a ceramic three-roll mixer at 50°C to obtain the adhesive compositions of Examples 1 to 9 and Comparative Examples 1 to 3.

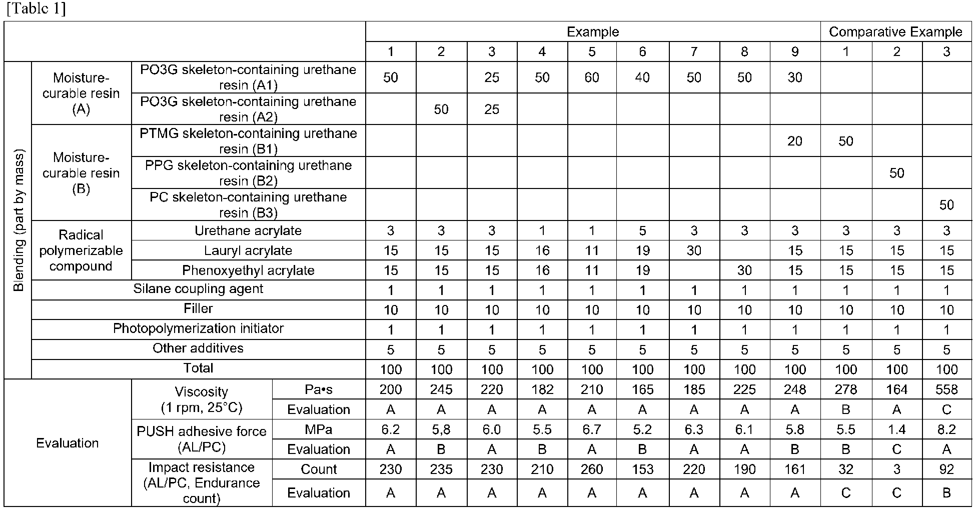

As shown in Table 1, the adhesive compositions in Examples contain the moisture-curable urethane resins (A) having a PO3G skeleton, which has therefore enabled enhancing the impact resistances and making the viscosities and the adhesive forces satisfactory. Meanwhile, the moisture-curable urethane resins (A) having a PPG skeleton, a PTMG skeleton, and a polycarbonate skeleton instead of a PO3G skeleton have been used for the adhesive compositions of Comparative Examples, which have not therefore enabled enhancing the impact resistances.

## Claims

1. An adhesive composition, comprising a moisture-curable urethane resin (A) that is a reaction product of a polyol (a1) having a polytrimethylene glycol skeleton and a polyfunctional isocyanate (a2).

2. The adhesive composition according to claim 1, further comprising a radical polymerizable compound and a photopolymerization initiator.

3. The adhesive composition according to claim 1 or 2, wherein a content of the moisture-curable urethane resin (A) is 10 parts by mass or more based on 100 parts by mass of the adhesive composition.

4. The adhesive composition according to claim 2, wherein a content of the radical polymerizable compound is 5 parts by mass or more and 80 parts by mass or less based on 100 parts by mass of the adhesive composition.

5. The adhesive composition according to claim 1 or 2, wherein a weight-average molecular weight of the moisture-curable urethane resin (A) is 2000 or more and 40000 or less.

6. An adhesive for electronic devices, comprising the adhesive composition according to claim 1 or 2.

7. A cured product of the adhesive composition according to claim 1 or 2.
